# EUROPÄISCHE PATENTSCHRIFT

(11) **EP 3 223 743 B1**
(45) Veröffentlichungstag und Bekanntmachung des Hinweises auf die Patenterteilung: **27.07.2022**
(21) Anmeldenummer: 15798132.5
(22) Anmeldetag: 23.11.2015
(51) Int. Cl.: A61C 13/34, A61C 9/00, A61C 19/05

(54) **BISSNAHMEWERKZEUG, BISSNAHMEWERKZEUGSET SOWIE GEEIGNETES VERFAHREN ZUR BISSREGISTRIERUNG**
BITE REGISTRATION TOOL, BITE REGISTRATION TOOL SET, AND SUITABLE BITE REGISTRATION METHOD
OUTIL DE PRISE OCCLUSALE, ENSEMBLE D'OUTIL DE PRISE OCCLUSALE ET PROCÉDÉ POUR L'ENREGISTREMENT OCCLUSAL

(30) Priorität: 25.11.2014 DE 102014117252
(43) Veröffentlichungstag der Anmeldung: 04.10.2017
(73) Patentinhaber: Merz Dental GmbH, 24321 Lütjenburg (DE)
(72) Erfinder: BÖHMERT, Peter, 24327 Högsdorf (DE)
(74) Vertreter: Fish & Richardson P.C.
(86) Internationale Anmeldenummer: PCT/EP2015/077396
(87) Internationale Veröffentlichungsnummer: WO 2016/083324

(56) Entgegenhaltungen:
- WO-A1-2015/011546
- DE-A1- 2 805 889
- US-A- 4 259 074
- US-A- 4 657 509
- US-A1- 2010 297 581
- US-A1- 2014 308 624
- US-B1- 6 447 292

## Beschreibung

Die vorliegende Erfindung betrifft ein Bissnahmewerkzeugset sowie ein geeignetes Verfahren zur Bissregistrierung. Bekanntermaßen werden für eine Bissregistrierung spezielle Registrate verwendet, die jeweils individuell und manuell hergestellt werden. Mit deren Hilfe werden die Kiefer der Patienten in Okklusionsstellung gebracht, damit diese Informationen in einem Artikulator zur weiteren Bearbeitung überführt werden können.

Hierzu werden herkömmlicherweise für die Abformung der Ober- und Unterkiefer konfektionierte Abformlöffel zur Aufnahme von Abformmaterialien aller Art verwendet. Mit diesen Abformlöffeln jeweils für den Ober- und Unterkiefer wird eine plastische Vorabformung der unbezahnten Kiefer realisiert. Diese Vorabformungen werden mit Gips ausgegossen, so dass man Planungsmodelle erhält, die es dem Zahntechniker ermöglichen, eine Vorbissnahme aus thermoplastischen oder anderen Materialien sowie Wachswällen zu erstellen. Ferner sind für die genauen Abformungen sehr stark individualisierte Kieferaufnahmevorrichtungen aus Kunststoff zu erstellen (Funktionslöffel), mit denen der Zahnarzt Funktionsabformungen macht, die die mucodynamischen Vorgänge des Weichgewebes widerspiegeln und die Lage des Funktionsrandes der späteren Prothese festlegt. Diese sehr genauen Abformungen werden wiederum mit Gips ausgegossen und zum Meistermodell verarbeitet. Danach werden die Meistermodelle des Ober- und Unterkiefers mit der Vorbissnahmevorrichtung in den Artikulator gesetzt, wobei die Vorbissnahme ausschließlich zur Bestimmung der vertikalen Höhe zwischen Ober- und Unterkiefer dient.

Auf den Meistermodellen werden jetzt Bissschablonen aus Kunststoff gefertigt, die dem Zahnarzt die Möglichkeit geben, die richtige horizontale Kieferschanierachse zu bestimmen. Diese Bissregistrierung wird dann in einem Artikulator eingestellt.

Allgemein ist den oben genannten Schritten insbesondere nachteilig, dass nach der Vorabformung und Funktionsabformung durch den Zahnarzt, jeweils der Zahntechniker hinzuziehen ist, um letztendlich die Prothesenbasis zu erstellen, die die Grundlage für den Zahnarzt zur Durchführung der Bissnahme bildet, um dann wiederum von dem Zahntechniker mittels des Artikulators eine Modelanalyse zur Erstellung eines Models anhand von Wachswällen vorzunehmen, welches dann wiederum vom Zahnarzt angepasst werden muss. Sollten Korrekturen erforderlich sein, muss sich der Zahnarzt erneut mit dem Zahntechniker in Verbindung setzen, um dann die Prothese endgültig vom Zahntechniker finalisieren zu lassen, die letztendlich dann wiederum vom Zahnarzt beim Patienten eingesetzt wird. Dies ist das bekannte aufwändige Verfahren zur Erstellung einer Teil- bzw. Totalprothese, welches einen mehrfachen Austausch zwischen Zahnarzt und Zahntechniker erforderlich macht.

Anstelle der bekannten plastischen Abformmethoden, d. h. analoge Methodik, wurden in jüngster Vergangenheit digitale Wege beschritten, um die erforderlichen Meistermodelle zu generieren. Mit Intraoralscannern oder I-Trays wurden sehr erfolgversprechende Wege beschritten, die die Abformung mit Hilfe eines konventionellen Löffelabdrucksystems völlig überflüssig machen. Die so generierten virtuellen Meistermodelle können sofort in eine Software implementiert werden und müssen mit einer Bissnahme oder Bissregistrierung, wie oben beschrieben, in Zusammenhang gebracht werden. Dieser Vorgang kann analog durchgeführt werden, indem man im Vorfeld die Modelle druckt oder fräst und das spätere Zusammensetzen mit der Registrierung im analogen Artikulator durchführt. Möglich ist aber auch ein digitaler Weg, indem man die virtuellen Modelle direkt mit den ebenfalls eingescannten Oberflächen der Kieferregistrierung virtuell eingipst, dem sogenannten Matching.

Grundsätzlich benötigt die Zahnmedizin einen sicheren, validierten Weg der optimalen Kieferregistrierung zur Ermittlung der vertikalen Höhe und der horizontalen Scharnierachse des Kiefergelenks. Dieser sehr entscheidende Schritt, die Abformung der beiden Kiefer und die Erfassung der richtigen Relation beider Kiefer zueinander, ist für den Erfolg beispielsweise einer totalprothetischen Arbeit von allerhöchster Bedeutung. Das Dokument US4657509 offenbart einen Abdrucklöffel und ein Verfahren zur Verwendung desselben.

Aufgabe der vorliegenden Erfindung ist es somit, die oben genannten Nachteile zu vermeiden. Ferner ist es Aufgabe der vorliegenden Erfindung nach erfolgter Abformung des Ober- und Unterkiefers zueinander ein hohes Maß an Präzision hinsichtlich der Relation von Ober- und Unterkiefer bereitzustellen. Ferner ist es eine weitere Aufgabe der vorliegenden Erfindung, die Funktion der späteren Prothese unmittelbar überprüfen zu können.

Gelöst werden diese Aufgaben mit den Merkmalen des Anspruchs 1 und dem Verfahren zur Bissregistrierung gemäß Anspruch 10. Anmeldungsgemäß wird ein Bissnahmewerkzeug bereitgestellt, welches aus in Okklusionsstellung aufgereihten Zahnformen besteht. Mit dieser Maßnahme wird der Vorteil erreicht, dass die Einprobe vor Ort beim Zahnarzt erfolgen kann und in Abstimmung mit dem Patienten im Zusammenwirken mit einer ebenfalls, vorzugsweise gleichförmig ausgebildeten Zahnform einer Totalprothese, welche aus industriell hergestellten Fräsblöcken mit ebenfalls in Okklusionsstellung aufgereihten Zahnformen hergestellt wird, entsprechend ausgerichtet werden können. Dadurch kann die individuelle Gebisssituation, welche durch die industrielle Herstellung dieser Fräsblöcke vorab festgelegt und angepast werden kann, für den Patienten bereits vor der Fertigstellung der Prothese vorgenommen werden. Es ist aber ebenso ersichtlich, dass das anmeldungsgemäße Bissnahmewerkzeug auch bei einer individuellen, manuellen Aufstellung von Zahnreihen der Teil- und Totalprothesen im klassischen Sinn eingesetzt werden kann. Wird das Bissnahmewerkzeug sowohl für den Oberkiefer als auch für den Unterkiefer mit in Okklusionsstellung aufgereihten Zahnformen hergestellt und für die Bissnahme verwendet, so kann nach erfolgter Einpassung und einer ästhetischen Überprüfung des Zahnarztes bezüglich des Oberkiefers auch das Bissnahmewerkzeug an den Unterkiefer über die Abformmasse hierzu passgenau eingesetzt und somit beim Zahnarzt vor Ort, vorzugsweise auf analoge Weise, eine Bissnahme vorgenommen werden. Anmeldungsgemäß wird somit auf einfache Weise eine bereits auf den Oberkiefer angepasste Teil- oder Totalprothese herangezogen und mit dem Bissnahmewerkzeug für den Unterkiefer zur Bissnahme herangezogen. Auch in diesem Fall kann der Zahnarzt den entsprechenden Ästhetikcheck mit dem Patienten in einer Sitzung durchführen, bevor die entsprechende Prothese für den Unterkiefer fabriziert und angepasst wird.

Mit der Bissnahmezone wird der Bereich bezeichnet, der letztendlich die Bissregistrierung festlegt. Bislang war die Bissnahmezone in der Okklusionsebene angeordnet, wobei anmeldungsgemäß nunmehr durch die Verlagerung der Bissnahmezone für den Unterkiefer unterhalb der Okklusionsebene der Vorteil erreicht wird, dass die Bissregistrierung flexibler mit dem anmeldungsgemäßen Bissnahmewerkzeug vorgenommen werden kann, da insbesondere die Verlagerung der Bissnahmezone außerhalb der Okklusionsebene, bzw. unterhalb der Okklusionsebene für den Unterkiefer die Bissnahmezone in einen flexibel gestalteten Abformbereich verlagert wird. Mit anderen Worten kann somit das Bissnahmewerkzeug in Okklusionsstellung in die Mundhöhle des Patienten eingebracht werden, wobei die Anpassung der Bissregistrierung in einer davor separaten Bissnahmezone vorgenommen wird.

Mit einem Bissnahmewerkzeug und somit das Vorsehen eines Aufnahmebereichs für den Zahnkiefer wird erreicht, dass wiederum der Zahnarzt gemeinsam mit dem Patienten einen Ästhetikcheck zusammen mit einer Bissnahme bzw. Bissregistrierung vornehmen und vor Hinzuziehung des Zahntechnikers mit dem Patienten die ästhetische Wirkung der später herzustellenden Teil- oder Totalprothese mit dem Patienten abstimmen kann.

Anmeldungsgemäß kann somit auf die Verwendung eines Artikulators verzichtet werden und die Abstimmung zwischen Zahnarzt und Zahntechniker wird auf das Wesentliche beschränkt. Im Idealfall erfolgt eine bifunktionale Abformung durch den Zahnarzt, d.h. in einer Anfangssitzung beim Zahnarzt, der sich dann vom Zahntechniker die fertige Teil- bzw. Totalprothese finalisiert zur Einprobe beim Patienten herstellen lässt, d.h. lediglich eine zweite Endsitzung wiederum beim Zahnarzt.

Ein Verschlüsselungselement wird beim Bissnahmewerkzeug vorgesehen und so können über das Verschlüsselungselement die kongruenten Flächen des Ober- und Unterkiefers, beispielsweise wenn nötig in einen Artikulator, transferiert werden. Das Verschlüsselungselement ist oral angeordnet, daher kann das anmeldungsgemäße Bissnahme- bzw. Bissregistrierungsverfahren unproblematisch und störungsfrei vorgenommen werden. Das Verschlüsselungselement ist auflösbar und vorteilhafterweise abnehmbar konfiguriert, so dass eine flexiblere Handhabung sowohl für den Zahnarzt vor Ort als auch für den Zahntechniker erreicht wird. Wird das Verschlüsselungselement mehrteilig ausgebildet, so kann die Anpassung der Bissnahme flexibler ausgestaltet werden. Bei einer formschlüssigen Aufnahme kann hygienetechnischen Vorgaben Rechnung getragen werden.

Ist vorteilhafterweise ein vorgeformter Gaumenbereich im Bissnahmewerkzeug für den Oberkiefer vorgesehen, so wird die orale Einpassung des Bissnahmewerkzeugs für den Oberkiefer verbessert, weil durch das Befüllen mit Abformmaterial sich eine Saugwirkung für das Bissnahmewerkzeug ergibt und es daher exakt in der zuvor ermittelten Position verbleibt.

Es hat sich besonders vorteilhaft herausgestellt, wenn grundsätzlich sterilisierbare Kunststoffe als Material für die Bissnahmewerkzeuge verwendet werden, vorzugsweise PEEK oder ähnliches Material. Generell wäre es auch denkbar, Metall als Werkstoff für Bissnahmewerkzeuge zu verwenden, jedoch ist deren Herstellungsverfahren unnötig kostenintensiver.

Wird grundsätzlich ein Bissnahmewerkzeugset bereitgestellt, welches ein Bissnahmewerkzeug für den Oberkiefer, ein Bissnahmewerkzeug für den Unterkiefer und eine Abformmasse, die entweder auf Silikonbasis hergestellt oder reversible und/oder thermoplastische Eigenschaften aufweist, wird der Vorteil erreicht, dass dem Zahnarzt alle für die Behandlung notwendigen Instrumente für die Bissnahme vorliegen, mit denen er alle relevanten Informationen und Daten, beispielsweise analog, zusammentragen kann, um eine Teil- bzw. Totalprothese von dem Zahntechniker fertigen lassen zu können.

Um die unterschiedlichen oralen Gegebenheiten des Patienten berücksichtigen zu können und die Anzahl der entsprechenden Bissnahmewerkzeugsets hinsichtlich der Vorratshaltung für den Zahnarzt auf ein erträgliches Maß zu halten, hat sich vorteilhafterweise herausgestellt, die Bissnahmewerkzeuge vorzugsweise in vier Größen, und zwar S, M, L, XL bereitzustellen.

Es hat sich ebenso als vorteilhaft herausgestellt, wenn das Bissnahmewerkzeugset ebenso ein Okklusionom mit Verbindungselement enthält, so dass eine Referenzierung über das Verbindungselement und dem Verschlüsselungselement mit dem Bissnahmewerkzeug fixiert wird. Mit dieser vorteilhaften Weiterbildung stehen somit dem Zahnarzt auch zahntechnische Instrumente zur Verfügung, die für eine optimale Bissregistrierung bzw. Bissnahme erforderlich sind.

Weitere vorteilhafte Weiterbildungen sind Gegenstand der weiteren Unteransprüche.

Verfahrenstechnisch wird mit dem Auflösen der Verbindung über das Verschlüsselungselement des Bissnahmewerkzeugs eine einfache Handhabung für den Zahnarzt erreicht, mit dem der Zahnarzt sowohl eine Ästhetikkontrolle als auch eine Lagepositionierung vornehmen kann. Sollte beispielsweise die Ästhetikkontrolle ein negatives Ergebnis hervorbringen, so kann der Zahnarzt unproblematisch die Bissnahme und/oder Bissregistrierungen wiederholen und ggf. ein positiveres Ergebnis erzielen.

Für die Herstellung der Teil- bzw. Totalprothese können dann die über das Verschlüsselungselement verschlüsselte Bissnahmewerkzeuge mit über die Abformmasse abgeformten Kieferbereichen in einen dentalen Scanner positioniert werden, um einen digitalen Datensatz zur Bissregistrierung- bzw. Bissnahme zu erzeugen. Mit diesem digitalen Datensatz kann dann mittels eines Fräsblocks, vorzugsweise eines Dentalfräsblocks, der ebenfalls die in Okklusionsstellung aufgereihten Zahnformen aufweist und die mit den Zahnformen des Bissnahmewerkzeugs in Einklang stehen, auf einfache und optimale Weise die Prothesenbasis einer Teil- bzw. Totalprothese gefräst bzw. hergestellt werden.

Es ist somit ersichtlich, dass mit dem anmeldungsgemäßen Bissnahmewerkzeugset mit einem Bissnahmewerkzeug für den Unterkiefer, welches vorzugsweise eine Bissnahmezone aufweist, in die eine Abformmasse zwischen Unterkiefer und Bissnahmewerkzeug eingebracht wird, dem behandelnden Zahnarzt eine gegenüber dem bislang bekannten Bissnahmeverfahren ein vereinfachtes aber auch vollständiges Mittel an die Hand gegeben wird, mit dem eine Bissregistrierung bzw. Bissnahme ermöglicht wird, die bei einer fehlerhaften Lagepositionierung bzw. bei Nichtgefallen der Ästhetik sowohl durch den Zahnarzt als auch den Patienten in einer Sitzung unmittelbar korrigiert werden kann. Die bisherigen Verfahren ermöglichten bisher die Überprüfung der Ästhetik frühestens zum Zeitpunkt der ersten Einprobe nach Erstellung durch den Zahntechniker.

Durch die jeweilige Ausgestaltung des Bissnahmewerkzeugs ist auch unter Verwendung einer silikonhaltigen und/oder reversiblen, und/oder thermoplastischen Abformmasse die Bissnahme bzw. Bissregistrierung bzw. Lagefixierung ganz mühelos und entspannt möglich.

Es sei hervorgehoben, dass unter dem Begriff "Zahnformen" jede räumliche Anordnung zu verstehen ist, die eine Okklusionsstellung bereitstellen kann, und zwar beispielsweise ebenso künstlich hergestellte Zähne.

Anhand der nachfolgenden Zeichnungen ist die vorteilhafte Ausgestaltung der vorliegenden Erfindung wiedergegeben.
Figur 1a zeigt das anmeldegemäße Bissnahmewerkzeug sowohl für den Oberkiefer als auch Unterkiefer.
Figur 1b zeigt das anmeldungsgemäße Bissnahmewerkzeug für den Oberkiefer und einem Okklusionom
Figur 2 zeigt die kongruenten Flächen, die sich aus dem Meistermodell ergeben sowie die negative Flächengeometrie des Teilabdrucks aus dem Oberkieferbissnahmewerkzeug.
Figur 3 zeigt die anmeldungsgemäßen Bissnahmewerkzeuge für Ober- und Unterkiefer, welche jeweils über Abformmassen mit den Meistermodellen für Ober- und Unterkiefer wiedergegeben sind.
Figur 4a, b zeigt die Fräsblöcke für den Ober- und Unterkiefer, die direkt mit dem Bissnahmewerkzeug über die Zahnreihen in Referenz stehen.
Figur 5 zeigt das in Fig. 1 gezeigte anmeldungsgemäße Bissnahmewerkzeug für den Oberkiefer und den Unterkiefer, die über das Verschlüsselungselement verschlüsselt sind
Figur 6 zeigt das in Fig.1 gezeigte anmeldungsgemäße Bissnahmewerkzeug für den Oberkiefer und den Unterkiefer mit einem mehrteiligen Verschlüsselungselement.

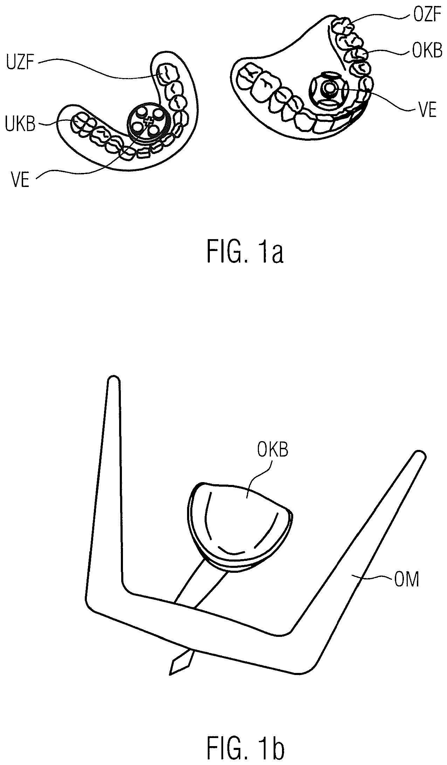

Figur 1 zeigt das Bissnahmewerkzeug für den Oberkiefer **OKB** und das Bissnahmewerkzeug für den Unterkiefer **UKB,** die jeweils in Okklusionsstellung aufgereihte Zahnform **UZF** für den Unterkiefer und für den Oberkiefer **OZF** darstellen. Zusätzlich sind in dieser Ausgestaltung ein Verschlüsselungselement **VE** dargestellt, über das die Bissnahme bzw. Bissregistrierung verschlüsselt wird. In dieser Ausgestaltung ist das Verschlüsselungselement **VE** mit Steckmöglichkeiten sowohl zum Bissnahmewerkzeug für den Unterkiefer UKB als auch zum Bissnahmewerkzeug für den Oberkiefer OKB, vorzugsweise formschlüssig und in die Bissnahmewerkzeuge integriert ausgebildet, d.h das Verschlüsselungselement ist aus dem gleichen Material wie die Bissnahmewerkzeuge ausgestellt. Allerdings sei an dieser Stelle darauf hingewiesen, dass die Verschlüsselungselemente auch als Magnet ausgebildet sind, die entsprechend zahntechnischen Vorgaben in die Bissnahmewerkzeuge eingebettet worden sind.

Aus der Figur 1a ist deutlich zu erkennen, dass das Bissnahmewerkzeug des Oberkiefers **OKB** in Überkopflage auf das Bissnahmewerkzeug des Unterkiefers **UKB** gelegt und zusammengefügt werden kann und die jeweiligen Zahnformen so aufgereiht sind, dass eine Okklusionsstellung erreichbar ist. Ist das Bissnahmewerkzeug des Oberkiefers **OKB** in Überkopflage auf das Bissnahmewerkzeug des Unterkiefers **UKB** zusammengefügt, so können beide Bissnahmewerkzeuge über die als Steckverbindung ausgebildete Verschlüsselungselemente verschlüsselt werden.

In Figur 1b ist ein Okklusionom **OM**, vorzugsweise ein Ala-Tragus-Finder, dargestellt, welches ein Verbindungselement aufweist. Das Verbindungselement ist so ausgestaltet, dass es mit dem Verschlüsselungselement des Bissnahmewerkzeugs für den Oberkiefer **OKB** verbunden, vorzugsweise kraftschlüssig, wird, damit das Bissnahmewerkzeug für den Oberkiefer **OKB** mit dem daran verbundenen Okklusionom **OM** in der Mundhöhle des Patienten ausgerichtet werden kann.

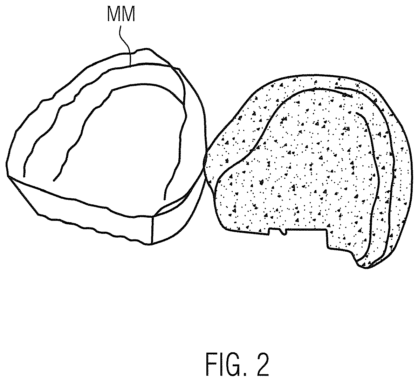

In Figur 2 ist beispielhaft für den Oberkiefer die positive Flächengeometrie des Meistermodells **MM** gezeigt, die beispielsweise digital eingescannt werden kann und/ oder mittels analoger Abformung generiert wird. Zusätzlich ist in Figur 2 die negative Geometrie des Teilabdrucks aus dem Oberkieferbissnahmewerkzeug, der mittels der Abformmasse, welche zwischen dem Bissnahmewerkzeug für den Oberkiefer **OKB** und dem Kieferkammbereich angebracht ist, hergestellt wurde. Anhand dieser beiden Formgebungen können über das sogenannte Matching in einem weiteren digitalen Prozess, diese flächenmäßig bzw. flächig zugeordnet werden. Aus der Darstellung in Figur 2 ist zu entnehmen, dass die entsprechende Zuordnung zwischen Bissnahmewerkzeug und Kieferkammbereich mittels silikonhaltiger und/oder einer reversiblen, und/oder thermoplastischen Abformmasse bereitgestellt wird, mittels der sowohl die horizontale als auch vertikale Positionierung erfolgt. Die Bissregistrierung bzw. Bissnahme erfolgt somit auf einfache Weise analog.

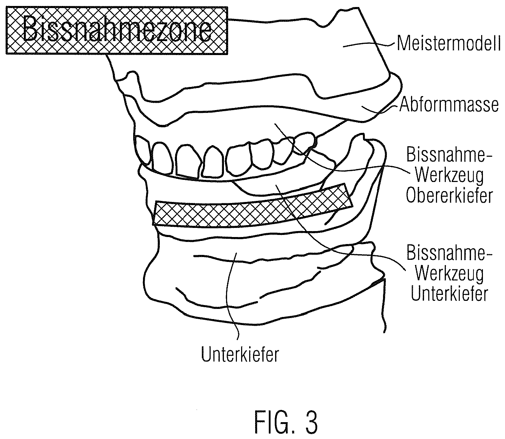

In Figur 3 ist die Anordnung exemplarisch gezeigt, anhand der die Bissnahmewerkzeuge sowohl des Ober- als auch Unterkiefers über Abformmassen mit den Meistermodellen für Ober- und Unterkiefer zusammengefügt ist. An dieser Darstellung ist insbesondere festzuhalten, dass letztendlich die entsprechende Bissnahmezone unterhalb der in Okklusionsstellung aufgereihten Zahnformen vorliegt, und zwar an dem sich bewegenden Unterkiefer. Hieran ist die Einfachheit des Bissnahme- bzw. Bissregistrierungsverfahrens besonders erkennbar, welche insbesondere durch die in Okklusionsstellung aufgereihten Zahnformen als auch eine Bissnahmezone, die ungewöhnlicherweise für den Unterkiefer unterhalb der Okklusionsebene liegt, erreicht wird, wobei die Bissnahmewerkzeuge Aufnahmebereiche für den Zahnkiefer aufweisen. Nachdem beispielsweise das Bissnahmewerkzeug für den Oberkiefer **OKB** über eine silikonhaltige und/oder reversible, und/oder thermoplastische Abformmasse in die Mundhöhle des Patienten eingebracht und positioniert wurde und ggf. bis zur Aushärtung der Abformmasse gewartet wird, wird dann nach der Verschlüsselung durch das Verschlüsselungselement das Bissnahmewerkzeug ebenso für den Unterkiefer **UKB** über die Abformmasse in die Mundhöhle des Patienten eingebracht. Aufgrund der Verschlüsselung und der in Okklusionsstellung aufgereihten Zahnformen werden dann die Zahnformen des Oberkieferbissnahmewerkzeugs **OKB** mit den Zahnformen des Unterkieferbissnahmewerkzeugs **UKB** in die Okklusionsstellung gebracht und eine Bissnahme vorgenommen, wodurch eine Bissnahmezone zwischen Unterkiefer und Unterkieferbissnahmewerkzeug erzeugt wird, die unterhalb der Okklusionsebene der aufgereihten Zahnform des Unterkiefers liegt. Über die zwischen dem Unterkiefer und dem Bissnahmewerkzeug für den Unterkiefer **UKB** befindliche plastische Abformmasse wird somit eine Bissnahmezone erzeugt, die sich unterhalb der Okklusionsebene der Zahnformen für den Unterkiefer befindet. Nach erfolgter Aushärtung der jeweiligen Abformmassen kann dann der Zahnarzt nach dem Lösen des Verschlüsselungselements zusammen mit dem Patienten einen Ästhetikcheck durchführen, um festzustellen, ob der ästhetische Gesamteindruck begründet durch die Länge der Frontzähne, die Form der Zähne allgemein, die Lachlinie, die Eckzahnlinie, Campersche Ebene und die Mittellinie bezogen zur Gesichtsmitte optimal eingestellt ist. Am Ende dieses ersten Prozesses der Bissnahme und der Kieferregistrierung kann somit der Patient in dieser ersten Sitzung bereits die räumlichen Gegebenheiten der Totalprothese erfahren und begutachten. Sollten diese ästhetischen Parameter stimmen, kann dann die Überprüfung der Funktion erfolgen, indem das Bissnahmewerkzeug für den Oberkiefer mit dem Bissnahmewerkzeug für den Unterkiefer ohne Verschlüsselung durch Schließen des Mundes durch den Patienten in den für ihn angenehmen sogenannte Schlussbiss gelangt. Über das Schließen des Mundes kann dann über die in gleicher Okklusionsstellung aufgereihten Zahnformen eines Fräsblockes und den weiteren vollständig vorliegenden Informationen der räumlichen Anordnung in der Mundhöhle des Patienten die Herstellung einer Teil- bzw. Totalprothese vorgenommen werden. Aufgrund dieser konventionell erfolgten Bissnahme- bzw. Bissregistrierung wird eine Schnittstelle zwischen Zahnarztpraxis und Labor geschaffen, die in dieser Einfachheit und Präzision bislang nicht erreicht werden konnte. Eine derartige vorteilhafte Anprobe beim Zahnarzt wird durch die Bissnahmewerkzeuge für den Oberkiefer **OBK** und Bissnahmewerkzeuge für den Unterkiefer **UKB** ermöglicht, die die bereits in Okklusionsstellung aufgereihten Zahnformen aufweisen, wobei die in Okklusionsstellung aufgereihten Zahnformen jeweils einem entsprechenden Fräsblock für Oberkiefer und Unterkiefer zugeordnet sind, der die gleichen oder ähnlichen in Okklusionsstellung aufgereihten Zähne enthält.

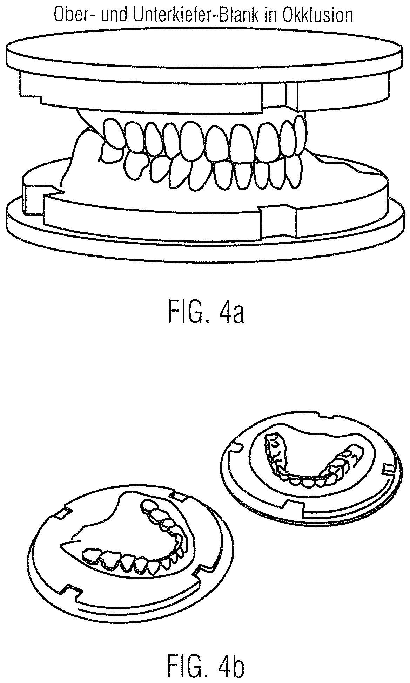

Ein derartiger Fräsblock für den Oberkiefer und Unterkiefer ist beispielsweise in Figur 4a in Okklusion gezeigt, wobei die jeweiligen Fräsblöcke für Oberkiefer und Unterkiefer in Okklusion in Figur 4b nicht verschlüsselt wiedergeben ist. Anhand dieser Darstellung ist erkennbar, welche Funktion das Verschlüsselungselement insbesondere während der Bissnahme bekommt, da somit eine im freien Raum auftretende Zuordnung zwischen Ober- und Unterkiefer erfolgt, die jeweils sowohl vertikal als auch horizontal die räumlichen Gegebenheiten für die Totalprothese für den Oberkiefer als auch für den Unterkiefer festlegt. Anhand des Verschlüsselungselementes wird somit gewährleistet, dass die räumliche Bearbeitung der jeweiligen Prothesenbasis der Fräsblöcke in Relation zueinander gebracht wird sowie über den Aufbau durch Abformmasse für Unterkiefer, Bissnahmewerkzeug für Unterkiefer **UKB,** Bissnahmewerkzeug für den Oberkiefer **OKB** sowie Abformmasse für Oberkiefer eine vollständige Lagefixierung und Positionierung im Raum für die jeweiligen Totalprothese ermöglicht wird.

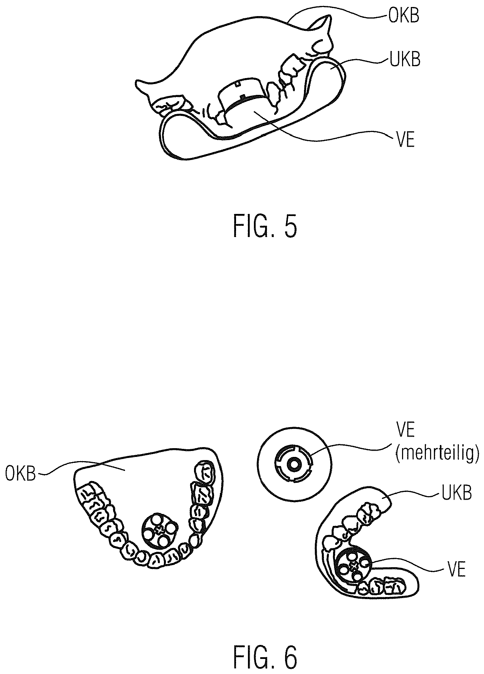

In Figur 5 ist das Bissnahmewerkzeug für den Oberkiefer **OKB** und das Bissnahmewerkzeug für Unterkiefer **UKB** über das Verschlüsselungselement **VE** verschlüsselt dargestellt. Die jeweiligen Zahnformen des Bissnahmewerkzeugs für den Oberkiefer **OKB** und den Unterkiefer **UKB** sind in Okklusionsstellung aneinander liegend und im Anlagekontakt.

Die über das Verschlüsselungselement verschlüsselten Bissnahmewerkzeuge mit Abformmasse werden dann in einem digitalen Scanner positioniert, um somit einen digitalen Datensatz zur Bissregistrierung bzw. Bissnahme erzeugen zu können, wodurch dann über die in Okklusionsstellung aufgereihten Zahnformen sowohl bei den Bissnahmewerkzeugen als auch im Fräsblock nach Vorliegen des digitalen Datensatzes die Prothesenbasis des Dentalfräsblocks so bearbeitet werden kann, dass auch der Zahntechniker in nur einem Arbeitsschritt eine vollständige Prothese gefräst, vorzugsweise digital gefräst, herstellen kann. Eine erneute Arbeitsaufnahme des Zahntechnikers ist auch deshalb nicht erforderlich bzw. unwahrscheinlich, da bereits der erforderliche Ästhetikcheck, der wichtige Informationen bezüglich der Mittellinie, der Bipupillarebene, der Okklusionsebene und der Länge der Frontzähne zu gewinnen, bereits durchgeführt wurde, damit der Zahntechniker in der Software die Lagefixierung bzw. die Bissregistrierung exakt umsetzen kann. Es ist ebenso von Vorteil, wenn über die Meistermodelle, vorzugsweise anmeldungsgemäß virtuellen Meistermodelle und den negativen Flächen, vorzugsweise anmeldungsgemäß virtuellen negativen Flächen der Abformmassen das verschlüsselte Bissnahmewerkzeug über die kongruenten Flächen gematcht werden können, um so den interalveolaren Raum genau zu definieren. Ferner werden im weiteren Schritt die Flächen des Vestibulärscans des Oberkieferbissnahmewerkzeugs mit der Oberfläche der Zahnreihe des Oberkiefer-Fräsblocks, die ebenfalls kongruent sind, zugeordnet.

In Figur 6 ist das Bissnahmewerkzeug für den Oberkiefer **OKB** und das Bissnahmewerkzeug für Unterkiefer **UKB** unverschlüsselt dargestellt, wobei deutlich ein mehrteiliges Verschlüsselungselement gezeigt ist, über das beispielsweise die vertikale Ausrichtung des Bissnahmewerkzeugs für den Oberkiefer **OKB** und des Bissnahmewerkzeugs für Unterkiefer **UKB** zueinander einstellbar ist. Ferner ist auch ersichtlich, dass über dieses mehrteilige Verschlüsselungselement, in Form einer aufeinander aufbauenden Steckverbindung, sowohl der Asthetikcheck als auch die Einprobe vereinfacht durchgeführt werden kann, wenn eines dieser mehrteiligen Verschlüsselungselemente abgenommen wurde. Diese technischen bzw. digitalen Zuordnungen basieren alle auf Informationen, die über die Bissnahmewerkzeuge analog gewonnen werden, indem mit Hilfe diverser Abformmaterialien in Form von Abformmassen, die in den bei den Bissnahmewerkzeuge vorgesehenem Aufnahmebereich für den Zahnkiefer eingebracht werden, die physiologische Okklusionsebene, die Länge der Frontzähne, die Form der Zähne allgemein, die Lachlinie, die Eckzahnlinie, die Mittellinie bezogen auf das Gesicht und einen ästhetischen Gesamteindruck eingestellt werden. Als Hilfestellung kann ein Okklusionom, beispielsweise in Form eines Referenzbogens, der nach der Camperschen Ebene ausgerichtet wird und eine Beziehung zur Bipupillarebene ermöglicht, herangezogen werden.

Es soll nochmal hervorgehoben werden, dass mit den anmeldungsgemäßen Bissnahmewerkzeugen sowohl der Zahnarzt als auch der Patient alle Parameter, die eine funktionstüchtige Prothese ausmachen, festlegen und austesten kann, und so die Bissnahme bzw. Kieferrelation validieren. Sollte diesbezüglich das Ergebnis nicht den Erwartungen entsprechen, kann der Behandler oder Zahnarzt die reine Bissnahme wiederholen und im Anschluß noch einmal verifizieren, bis der Patient und der Zahnarzt zu einem endgültigen und überprüften Ergebnis gelangt sind. Auch hier ist eine enorme Materialersparnis eingehergehend, da lediglich die ausgehärtete Abformmasse erneuert bzw. ergänzt werden muss. Nach erfolgtem Ästhetikcheck werden dann die beiden Bissnahmewerkzeuge für Ober- und Unterkiefer verschlüsselt, um die entsprechende Funktionsüberprüfung vorzunehmen. Sind die Bissnahmewerkzeuge für Ober- und Unterkiefer danach wieder verschlüsselt, dann kann so der Gesamtkomplex eingescannt werden und über den Kieferkammbereich gematcht und die so erhaltenen Daten zur Bearbeitung der Prothesenbasis eines Fräsblockes, der einhergehend mit den Zahnformen der Bissnahmewerkezeuge gleiche oder ähnliche Zahnformen bereitstellt, herangezogen werden.

Es hat sich als vorteilhaft herausgestellt, wenn die in Okklusionsstellung aufgereihten Zahnformen zumindest teilweise den ebenfalls in Okklusionsstellung aufgereihten Zahnformen einen Fräsblocks, vorzugsweise Dentalfräsblock, entsprechen, wie es in der deutschen Patentanmeldung DE102011118320.9 beschrieben ist.

## Patentansprüche

1. Bissnahmewerkzeugset aufweisend ein Bissnahmewerkzeug für einen Oberkiefer (OKB) und ein Bissnahmewerkzeug für einen Unterkiefer (UKB), enthaltend in Okklussionsstellung aufgereihte Zahnformen, wobei die aufgereihten Zahnformen künstlich hergestellte Zähne sind,
wobei ein Verschlüsselungselement Z (VE) im Bissnahmewerkzeug Z (OKB,UKB) vorgesehen ist
wobei das Verschlüsselungselement (VE) oral angeordnet und auflösbar ist, und
wobei ein Okklusionom (OM) mit Verbindungselement vorgesehen ist, das über das Verschlüsselungselement (VE) mit dem Bissnahmewerkzeug des Oberkiefers (OKB) fixiert werden kann.

2. Bissnahmewerkzeugset nach Anspruch 1, wobei das Bissnahmewerkzeug für den Oberkiefer und das Bissnahmewerkzeug für den Unterkiefer einen Aufnahmebereich für den Zahnkiefer aufweist.

3. Bissnahmewerkzeugset nach einem der Ansprüche 1 oder 2, wobei das Verschlüsselungselement abnehmbar ist, wobei vorzugsweise das Verschlüsselungselement aus einer Steckverbindung, vorzugsweise formschlüssig und/oder mehrteilig gebildet ist.

4. Bissnahmewerkzeugset nach Anspruch 1, **dadurch gekennzeichnet, dass** ein vorgeformter Gaumenbereich im Bissnahmewerkzeug für den Oberkiefer vorgesehen ist.

5. Bissnahmewerkzeugset nach einem der Ansprüche 1 bis 4, **dadurch gekennzeichnet, dass** PEEK oder andere sterilisierbare Kunststoffe als Material für das Bissnahmewerkzeug verwendet werden.

6. Bissnahmewerkzeugset nach einem der Ansprüche 1 bis 5, **dadurch gekennzeichnet, dass** die Zahnformen einer vollständigen Zahnreihe für eine Totalprothese entspricht.

7. Bissnahmewerkzeugset nach einem der Ansprüche 1 bis 6, **dadurch gekennzeichnet, dass** eine Abformmasse, vorzugsweise eine reversible, thermoplastische Abformmasse, vorgesehen ist.

8. Bissnahmewerkzeugset nach einem der Ansprüche 1 bis 7, **dadurch gekennzeichnet, dass** die Bissnahmewerkzeuge in vier Größen S, M, L, XL vorliegen.

9. Bissnahmewerkzeugset nach Anspruch 1, **dadurch gekennzeichnet, dass** ein Fräsblocksystem aufweisend einen Fräsblock für einen Oberkiefer und einem Unterkiefer vorgesehen ist, dessen künstlich geformte Zähne eines vollständigen Gebisses in Okklusionsstellung vorliegen, und die künstlich geformten Zähne den in Okklusionstellung aufgereihten Zahnformen entsprechen.

10. Verfahren zur Bissregistrierung, insbesondere für eine Totalprothese, unter Verwendung eines Bissnahmewerkzeugsets nach einem der vorherigen Ansprüchen 1 bis 9, welches die Schritte aufweist:
a) Bereitstellen eines Bissnahmewerkzeuges für den Oberkiefer (OKB), welches einen vorgeformten Gaumenbereich aufweist, und eines Bissnahmewerkzeuges für den Unterkiefer (UKB), welches eine Bissnahmezone aufweist,
b) Einbringen einer Abformmasse, vorzugsweise reversible thermoplastische Abformmasse, zwischen Oberkiefer und Bissnahmewerkzeug für den Oberkiefer (OKB),
c) Verbinden der Bissnahmewerkzeuge über ein Z Verschlüsselungselement (VE),
d) Einbringen einer Abformmasse in die Bissnahmezone zwischen Unterkiefer und Bissnahmewerkzeug für den Unterkiefer (UKB) zur Durchführung der Bissnahme,
e) Abformen des Oberkiefergaumenbereichs, und vorzugsweise des knöchernen Kieferkammbereichs, zur Erstellung eines virtuellen Z Oberkieferfunktionsmodells, um kongruente Flächen zum virtuellen Oberkieferfunktionsmodells zusammenzufügen.

11. Verfahren nach Anspruch 10, **dadurch gekennzeichnet, dass** nach Aushärtung der Abformmasse mit dem Auslösen der Verbindung über das Verschlüsselungselement des Bissnahmewerkzeugs eine Ästhetikkontrolle für den Zahnarzt und/oder eine Lagepositionierung vorgenommen wird.

12. Verfahren nach einem der Ansprüche 10 oder 11, **dadurch gekennzeichnet, dass** die über das Verschlüsselungselement verschlüsselten Bissnahmewerkzeuge mit Abformasse in einen dentalen Scanner positioniert werden, um einen digitalen Datensatz zur Bissregistrierung zu erzeugen und vorzugsweise anhand des digitalen Datensatzes die jeweilige Prothesenbasis eines Zahnsatzes für Ober- und Unterkiefer mit künstlich geformten Zahnreihen in Okklusionsstellung bearbeitet wird.

## Claims

1. Bite registration tool set having an upper-jaw bite registration tool (OKB) and a lower-jaw bite registration tool (UKB), comprising tooth casts that are lined up in an occlusal position, wherein the lined-up tooth casts are artificially produced teeth, wherein a coding element (VE) is provided in the bite registration tool (OKB, UKB), wherein the coding element (VE) is arranged orally and can be broken up, and wherein a bite fork (OM) with connection element is provided, which can be fixed to the upper-jaw bite registration tool (OKB) via the coding element (VE).

2. Bite registration tool set according to Claim 1, wherein the upper-jaw bite registration tool and the lower-jaw bite registration tool have a receiving region for the jaw.

3. Bite registration tool set according to either of Claims 1 and 2, wherein the coding element is removable, wherein the coding element is preferably formed by a plug connection, preferably with form-fit engagement, and/or in multiple parts.

4. Bite registration tool set according to Claim 1, **characterized in that** a pre-formed palate region is provided in the upper-jaw bite registration tool.

5. Bite registration tool set according to one of Claims 1 to 4, **characterized in that** PEEK or other sterilizable plastics are used as material for the bite registration tool.

6. Bite registration tool set according to one of Claims 1 to 5, **characterized in that** the tooth casts correspond to a complete row of teeth for a total prosthesis.

7. Bite registration tool set according to one of Claims 1 to 6, **characterized in that** an impression compound, preferably a reversible thermoplastic impression compound, is provided.

8. Bite registration tool set according to one of Claims 1 to 7, **characterized in that** the bite registration tools are present in four sizes S, M, L and XL.

9. Bite registration tool set according to Claim 1, **characterized in that** a milling block system having a milling block for an upper jaw and a lower jaw is provided, of which artificially formed teeth of a complete denture are present in an occlusal position, and the artificially formed teeth correspond to the tooth casts that are lined up in the occlusal position.

10. Method for bite registration, in particular for a total prosthesis, using a bite registration tool set according to one of Claims 1 to 9, said method comprising the steps of:
a) making available an upper-jaw bite registration tool (OKB), which has a pre-formed palate region, and a lower-jaw bite registration tool (UKB), which has a bite registration zone,
b) introducing an impression compound, preferably a reversible thermoplastic impression compound, between the upper jaw and the upper-jaw bite registration tool (OKB),
c) connecting the bite registration tools via a coding element (VE),
d) introducing an impression compound into the bite registration zone between the lower jaw and the lower-jaw bite registration tool (UKB) in order to carry out the bite registration,
e) taking an impression of the maxillary palate region, and preferably of the osseous alveolar ridge region, for creation of a virtual function model of the upper jaw, in order to join together congruent surfaces to the virtual function model of the upper jaw.

11. Method according to Claim 10, **characterized in that**, after the impression compound has hardened, and with the release of the connection via the coding element of the bite registration tool, a check of the aesthetics by the dentist and/or a positioning is carried out.

12. Method according to either of Claims 10 and 11, **characterized in that** the bite registration tools encoded via the coding element are positioned with impression compound in a dental scanner in order to generate a digital data record for the bite registration, and, preferably on the basis of the digital data record, the respective prosthesis base of a tooth set for upper jaw and lower jaw with artificially formed rows of teeth is machined in the occlusal position.

## Revendications

1. Ensemble d'outils de prise d'occlusion comprenant un outil de prise d'occlusion pour une mâchoire supérieure (OKB) et un outil de prise d'occlusion pour une mâchoire inférieure (UKB), contenant des formes de dents alignées en position d'occlusion, les formes de dents alignées étant des dents fabriquées artificiellement,
un élément de fermeture (VE) étant prévu dans l'outil de prise d'occlusion (OKB, UKB),
l'élément de fermeture (VE) étant agencé oralement et étant détachable, et
un occlusionome (OM) avec élément de liaison étant prévu, qui peut être fixé par l'intermédiaire de l'élément de fermeture (VE) à l'outil de prise d'occlusion de la mâchoire supérieure (OKB).

2. Ensemble d'outils de prise d'occlusion selon la revendication 1, dans lequel l'outil de prise d'occlusion pour la mâchoire supérieure et l'outil de prise d'occlusion pour la mâchoire inférieure présentent une zone de réception pour la mâchoire dentaire.

3. Ensemble d'outils de prise d'occlusion selon l'une quelconque des revendications 1 ou 2, dans lequel l'élément de fermeture est amovible, l'élément de fermeture étant de préférence formé d'un assemblage par emboîtement, de préférence à complémentarité de forme et/ou en plusieurs parties.

4. Ensemble d'outils de prise d'occlusion selon la revendication 1, **caractérisé en ce qu'**une zone palatine préformée est prévue dans l'outil de prise d'occlusion pour la mâchoire supérieure.

5. Ensemble d'outils de prise d'occlusion selon l'une quelconque des revendications 1 à 4, **caractérisé en ce que** du PEEK ou d'autres matières plastiques stérilisables sont utilisés en tant que matériau pour l'outil de prise d'occlusion.

6. Ensemble d'outils de prise d'occlusion selon l'une quelconque des revendications 1 à 5, **caractérisé en ce que** les formes de dents correspondent à une rangée de dents complète pour une prothèse totale.

7. Ensemble d'outils de prise d'occlusion selon l'une quelconque des revendications 1 à 6, **caractérisé en ce qu'**une masse de moulage, de préférence une masse de moulage thermoplastique réversible, est prévue.

8. Ensemble d'outils de prise d'occlusion selon l'une quelconque des revendications 1 à 7, **caractérisé en ce que** les outils de prise d'occlusion existent en quatre tailles S, M, L, XL.

9. Ensemble d'outils de prise d'occlusion selon la revendication 1, **caractérisé en ce qu'**un système de bloc de fraisage comprenant un bloc de fraisage pour une mâchoire supérieure et une mâchoire inférieure est prévu, dont les dents formées artificiellement d'une dentition complète sont en position d'occlusion, et les dents formées artificiellement correspondent aux formes de dents alignées en position d'occlusion.

10. Procédé d'enregistrement d'occlusion, notamment pour une prothèse totale, utilisant un ensemble d'outils de prise d'occlusion selon l'une quelconque des revendications 1 à 9 précédentes, comprenant les étapes suivantes :
a) la fourniture d'un outil de prise d'occlusion pour la mâchoire supérieure (OKB), qui présente une zone palatine préformée, et d'un outil de prise d'occlusion pour la mâchoire inférieure (UKB), qui présente une zone de prise d'occlusion,
b) l'introduction d'une masse de moulage, de préférence d'une masse de moulage thermoplastique réversible, entre la mâchoire supérieure et l'outil de prise d'occlusion pour la mâchoire supérieure (OKB),
c) la liaison des outils de prise d'occlusion par l'intermédiaire d'un élément de fermeture (VE),
d) l'introduction d'une masse de moulage dans la zone de prise d'occlusion entre la mâchoire inférieure et l'outil de prise d'occlusion pour la mâchoire inférieure (UKB) pour réaliser la prise d'occlusion,
e) le moulage de la zone palatine de la mâchoire supérieure, et de préférence de la zone de la crête osseuse, pour créer un modèle fonctionnel virtuel de la mâchoire supérieure, afin de réunir des surfaces congruentes pour former le modèle fonctionnel virtuel de la mâchoire supérieure.

11. Procédé selon la revendication 10, **caractérisé en ce qu'**après le durcissement de la masse de moulage avec le désengagement de la liaison par l'intermédiaire de l'élément de fermeture de l'outil de prise d'occlusion, un contrôle esthétique est effectué pour le dentiste et/ou un positionnement.

12. Procédé selon l'une quelconque des revendications 10 ou 11, **caractérisé en ce que** les outils de prise d'occlusion avec la masse de moulage, fermés par l'intermédiaire de l'élément de fermeture, sont positionnés dans un scanner dentaire pour produire un ensemble de données numériques pour l'enregistrement d'occlusion et, de préférence, la base de prothèse respective d'un ensemble de dents pour la mâchoire supérieure et la mâchoire inférieure avec des rangées de dents formées artificiellement est traitée en position d'occlusion à l'aide de l'ensemble de données numériques.
